# EUROPÄISCHE PATENTSCHRIFT

(11) **EP 0 408 099 B1**
(45) Veröffentlichungstag und Bekanntmachung des Hinweises auf die Patenterteilung: **18.05.1994**
(21) Anmeldenummer: 90201658.3
(22) Anmeldetag: 23.06.1990
(51) Int. Cl.: C08F 251/00

(54) **Verfahren zur Herstellung wässriger Polymerisatdispersionen**
Process for producing aqueous polymer dispersions
Procédé de fabrication de dispersions aqueuses de polymères

(30) Priorität: 11.07.1989 DE 3922784
(43) Veröffentlichungstag der Anmeldung: 16.01.1991
(73) Patentinhaber: SYNTHOMER CHEMIE GMBH, D-60323 Frankfurt (DE); CERESTAR HOLDING BV, NL-4550 AA Sas Van Gent (NL)
(72) Erfinder: Rinck, Günter, Dr., D-6000 Frankfurt 71 (DE); Möller, Knut, Dr., D-6451 Neuberg (DE); Füllert, Sigismund, D-6000 Frankfurt 1 (DE); Krause, Frank, Dr., D-4190 Kleve (DE); Koch, Helmut, Dr., B-1980 Tervuren (BE)
(74) Vertreter: Rieger, Harald, Dr.

(56) Entgegenhaltungen:
- DE-A- 3 323 804
- US-A- 3 138 564
- US-A- 3 492 082

## Beschreibung

Die Erfindung betrifft ein Verfahren zur Herstellung wäßriger Polymerisatdispersionen durch Polymerisation ethylenisch ungesättigter Verbindungen mittels freie Radikale liefernder Initiatoren in Gegenwart von Stärke und/oder Stärkederivaten und ggfs. weiterer Zusatzstoffe.

Die Herstellung von Polymerisatdispersionen in Gegenwart von Stärke oder Stärkederivaten als Schutzkolloid ist bekannt. Nach dem aus der JP-OS 58/87 105 bekannten Emulsionspolymerisationsverfahren werden zusammen mit anderen Monomeren 0,5 bis 5 Gew.-% pfropffähige ethylenisch ungesättigte Monomere mit 10 bis 50 Gew.-% eines niedermolekularen Polysaccharids in wäßriger Lösung polymerisiert. Die Monomere können mono- oder diolefinische Verbindungen sein; sie führen aber nur in den angegebenen kritischen Mengen zu stabilen Latices.

Die aus der EP-OS 257 412 bekannten Leimungsmittel für Papier basieren auf Copolymerisatdispersionen, die durch Emulsionspolymerisation von Acrylnitril, Acrylsäureestern und ggfs. anderen ethylenisch ungesättigten Verbindungen, wie ungesättigten Carbonsäuren, in Gegenwart von abgebauter Stärke polymerisiert werden. Den Beispielen sind Copolymerisatdispersionen mit relativ niedrigen Feststoffgehalten von etwa 20 bis 30 Gew.-% zu entnehmen.

Aus der EP-OS 134 449 ist ein Verfahren zur Herstellung wäßriger Polymerisatdispersionen durch Emulsionspolymerisation ethylenisch ungesättigter Verbindungen in Gegenwart von Stärke und mindestens 0,6 Gew.-% Stärkederivaten bekannt. Bevorzugt werden dem Reaktionsgemisch vor Polymerisationsbeginn 0,5 Gew-% der als Schutzkolloid wirkenden Stärkederivate zugesetzt. Im bekannten Verfahren werden bei Reaktionstemperaturen von 10 bis 100°C organische Hydroperoxide als radikalbildende Initiatoren verwendet. Es resultieren Polymerisatdispersionen mit relativ großen Teilchendurchmessern von 235 bis 3500 nm. Die nach dem vorbekannten Verfahren gewonnenen Polymerisatdispersionen können beispielsweise als Textil- oder Papierhilfsmittel verwendet werden.

Die bekannten Verfahren und die nach diesen Verfahren erhaltenen Polymerisatdispersionen befriedigen in der technischen Praxis noch nicht in allen Fällen, sei es, daß deren Feststoffgehalte im allgemeinen unwirtschaftlich niedrig sind oder die verfahrensmäßig erzeugten hohen Viskositäten verarbeitungstechnische Nachteile haben.

Der Erfindung liegt daher die Aufgabe zugrunde, ein Verfahren zur Herstellung von Polymerisatdispersionen unter Mitverwendung von Stärke bereitzustellen, das einfach durchzuführen ist und zu stabilen, fließfähigen, wäßrigen Polymerisatdispersionen mit niedriger Viskosität und hohem Feststoffgehalt von mindestens 50 Gew.-% führt, wobei die Polymerisatteilchen einen kleinen Teilchendurchmesser aufweisen sollen.

Zur Lösung der Aufgabe geht die Erfindung aus von einem Verfahren zur Herstellung wäßriger Polymerisatdispersionen durch Polymerisation ethylenisch ungesättigter Verbindungen mittels freie Radikale liefernder Initiatoren in Gegenwart von Stärke und/oder Stärkederivaten und ggfs. weiterer Zusatzstoffe.

Bei einem Verfahren der genannten Art besteht die Erfindung nun darin, daß in einem halbkontinuierlichen Verfahren 100 Gew.-Teile Monomer oder Monomermischung aus
20 bis 100 Gew.-% eines Diens
0 bis 80 Gew.-% eines vinylaromatischen Monomers
0 bis 50 Gew.-% eines ethylenisch ungesättigten Monomers
in Gegenwart von 10 bis 200 Gew.-Teilen gegebenenfalls chemisch modifizierter Dextrine polymerisiert werden, deren Gewichtsanteil mit einem Molekulargewicht über 5000 mindestens 50 Gew.-%, und deren Gewichtsanteil mit einem Molekulargewicht über 100 000 höchstens 5 Gew.-% beträgt.

In dem Verfahren der Erfindung werden als ungesättigte Monomere Diene allein oder in Mischung mit anderen copolymerisierbaren ungesättigten Monomeren eingesetzt. Als Diene eignen sich beispielsweise 1,3-Butadien, Isopren, Cyclobutadien. 1,3-Butadien wird bevorzugt. Geeignete ungesättigte copolymerisierbare Monomere sind monomere Vinylaromaten wie Styrol, α-Methylstyrol, 4-Methylstyrol; ferner ethylenisch ungesättigte Monomere wie (Meth)acrylsäureester von C₁- bis C₁₈-Alkoholen wie Ethyl(meth)acrylat, Butyl(meth)acrylat, Stearylacrylat; (Meth)acrylnitril; ferner ungesättigte Mono- oder Dicarbonsäuren wie (Meth)acrylsäure, Maleinsäure, Fumarsäure, Itaconsäure; Amide von ungesättigten Monocarbonsäuren wie (Meth)acrylamid. Ebenfalls können eingesetzt werden anionische Comonomere wie Salze von Styrolsulfonsäure oder Acrylamidoalkylsulfonsäuren, kationische Comonomere wie 2-Dimethylaminoethyl(meth)acrylat, N-Dimethylaminopropyl(meth)acrylamid, 2-Trimethylammoniumethyl(meth)acrylatchlorid und N-Trimethylammoniumpropyl(meth)acrylamidchlorid, multifunktionelle, vernetzende Comonomere wie Divinylbenzol oder Methylol(meth)acrylamide und deren Derivate wie i-Propoxymethyl(meth)acrylamid oder Methoxymethyl(meth)acrylamid. Die vinylaromatischen Monomere werden neben dem Dien in Mengen bis 80 Gew.-% und die ethylenisch ungesättigten Monomere in Mengen bis 50 Gew.-% eingesetzt. Die Auswahl dieser Verbindungen richtet sich nach dem jeweiligen Einsatzzweck des Copolymerisats. Die Auswahlkriterien sind dem Fachmann bekannt bzw. lassen sich leicht in orientierenden Versuchen ermitteln.

In dem Verfahren der Erfindung ist die Wahl der Zusammensetzung des Monomergemisches nicht durch die Stabilität der Dispersion eingeschränkt. In den angegebenen Konzentrationsbereichen von 20 bis 100 Gew.-% Dien, 0 bis 80 Gew.-% vinylaromatisches Monomer und 0 bis 50 Gew.-% ethylenisch ungesättigtes Monomer lassen sich die dextrinhaltigen Polymerdispersionen koagelfrei polymerisieren.

Bei Bedarf können dem Reaktionsgemisch weitere übliche Zusatzstoffe zugesetzt werden. Zu diesen Zusatzstoffen zählen Keimlatices, welche die Reproduzierbarkeit der Teilchengröße der Endprodukte verbessern, sowie Puffer, Komplexbildner, Dispergiermittel und Emulgatoren. Im allgemeinen ist die Verwendung von Emulgatoren oder Dispergiermitteln neben der auch als Schutzkolloid wirksamen Dextrinkomponente nicht notwendig.

Es wurde gefunden, daß es entscheidend darauf ankommt, daß der Gewichtsanteil der verwendeten Dextrine für Molekulargewichte über 100 000 höchstens 5 Gew.-% beträgt. Ein zu hoher Abbaugrad des Dextrins wirkt sich hingegen auch nachteilig auf die anwendungstechnischen Eigenschaften der dextrinhaltigen Polymerisatdispersionen aus. Der Anteil der Molekulargewichte < 5000 soll daher 50 Gew.-%, vorzugsweise 45 und insbesondere 35 Gew.-% nicht überschreiten. Das mittlere Molekulargewicht der abgebauten Dextrine ist hingegen nicht von entscheidendem Einfluß auf die Stabilität und Viskosität der nach dem erfindungsgemäßen Verfahren hergestellten Dispersionen.

Das erfindungsgemäße Verfahren kann besonders erfolgreich durchgeführt werden, wenn der Gewichtsanteil der Dextrine mit einem Molekulargewicht über 5000 vorzugsweise mindestens 55 und insbesondere mindestens 65 Gew.-% beträgt.

Dextrine sind Abbauprodukte der Stärke mit der allgemeinen Formel (C₆H₁₀O₅)ₙ x H₂O, die bei der unvollständigen Stärke-Hydrolyse mit verdünnten Säuren oder durch Hitzeeinwirkung entstehen und aus Glucoseketten bestehen.

Die Herstellung der in dem erfindungsgemäßen Verfahren verwendeten Dextrine erfolgt nach an sich bekannten Verfahren. Der Stärkeabbau erfolgt durch Hitzeeinwirkung (mit oder ohne Zusatz von Chemikalien, wie Säuren), bei der die Amylose- und Amylopektinmoleküle gespalten werden. Eine Rekombination von Molekülen ist möglich. Von Art und Dauer dieser Behandlung hängt das resultierende mittlere Molekulargewicht und die Molekulargewichtsverteilung der Dextrine ab. Als Ausgangsmaterial für diese Abbaureaktion können sowohl native als auch modifizierte Stärken eingesetzt werden. Ein Verfahren der Stärkemodifikation ist z.B. die Oxidation, bei der Aldehyd- und Carboxylgruppen eingeführt werden. Andere Substituenten können Estergruppen oder Ethergruppen oder kationische Gruppen (z.B. tertiäres Aminoalkyl- oder quarternäres Ammoniumalkyl-) sein.

Nach einer bevorzugten Ausführungsform des erfindungsgemäßen Verfahrens wird die gesamte wäßrige Dextrinlösung oder -dispersion getrennt und gleichzeitig mit dem Monomer oder der Monomermischung in den Polymerisationsreaktor kontinuierlich eingeleitet.

Besonders bevorzugt ist eine Ausführungsform des Verfahrens der Erfindung, bei der die wäßrige Dextrinlösung oder -dispersion unmittelbar vor dem Eintritt in den Polymerisationsreaktor mit dem Monomer oder der Monomermischung intensiv und homogen vermischt und die Mischung unter Vermeiden jedweder Verzögerung unverzüglich anschließend in den Polymerisationsreaktor kontinuierlich eingeleitet wird.

Die innige Mischung kann mit an sich bekannten Mischeinrichtungen herbeigeführt werden, beispielsweise in mit schnellaufenden Rührwerken ausgestatteten Behältern oder, besonders vorteilhaft, in sogenannten statischen oder dynamischen Mischrohren. Derartige Einrichtungen ermöglichen in apparativer Hinsicht einen besonders wirtschaftlichen Aufbau der halbkontinuierlichen Polymerisationsanlage.

In weiterer Ausgestaltung der Erfindung ist vorgesehen, daß als Dextrin ein kationisch modifiziertes Dextrin verwendet wird. Die Dextrine werden nach der Erfindung in einer Menge von 10 bis 200 Gew.-Teilen (auf TS bezogen) pro 100 Gew.-Teile Monomer oder Monomermischung eingesetzt. In einer bevorzugten Ausführungsform der Erfindung werden die Dextrine in einer Menge von 25 bis 100 Gew.-Teilen pro 100 Gew.-Teilen Monomer oder Monomermischung verwendet. Weiterhin ist nach der Erfindung vorgesehen, daß die Polymerisation bei Temperaturen von 0 bis 120, vorzugsweise 40 bis 100°C durchgeführt wird.

Während die Komponenten Monomer und Dextrin nach einer besonders bevorzugten Ausführungsform des erfindungsgemäßen Verfahrens gemeinsam und in homogener Mischung in den Reaktor eingeführt werden, wird gleichzeitig in einem getrennten (separaten) Strom die Hauptmenge des in wäßrigem Medium befindlichen Initiators eindosiert. Um eine gute Verteilung der Einzelkomponenten von Beginn an durch Rührwirkung zu gewährleisten, wird zweckmäßig im Reaktor Wasser mit einer kleinen Menge des Initiators vorgelegt. Der Initiator oder das Initiatorgemisch wird in Mengen von mindestens 0,1 Gew.-% - bezogen auf Gesamtmenge Monomer - verwendet und vorzugsweise in Mengen von 1 bis 3 Gew.-%.

Als freie Radikale bildende Initiatoren können Wasserstoffperoxid, organische Peroxide und Hydroperoxide, ggfs. in Kombination mit reduzierenden Verbindungen, wie Natriumhydrogensulfit oder Natriumformaldehydsulfoxylat, sowie wasserlösliche Azoverbindungen verwendet werden. Nach der Erfindung ist die Verwendung von Alkalimetall- oder Ammoniumsalzen der Peroxidischwefelsäure, vorzugsweise in Mengen von mindestens 0,1 Gew.-%, bezogen auf die Gesamtmenge der Monomere, besonders vorteilhaft.

In dem Verfahren der Erfindung wird bevorzugt eine Monomermischung der Zusammensetzung
20 bis 70 Gew.-% 1,3-Butadien
30 bis 80 Gew.-% Styrol
0 bis 15 Gew.-% Acrylnitril
0 bis 5 Gew.-% ethylenisch ungesättigte Mono- oder Dicarbonsäure, insbesondere Acrylsäure und/oder Itaconsäure
verwendet.

Beim erfindungsgemäßen Verfahren wird - wie bereits gesagt - eine Reaktionstemperatur zwischen 0 und 120°C eingehalten. Vorzugsweise wird die Reaktionstemperatur so gewählt, daß die Halbwertzeit der freie Radikale bildenden Initiatoren klein genug ist, um ausreichend schnelle Reaktionen zu gewährleisten. Der bevorzugte Temperaturbereich liegt bei der Verwendung von Peroxidisulfaten zwischen 40 und 100°C. Der Druck wird während der Polymerisation nicht reguliert und stellt sich als Summe der Partialdrücke der Reaktionskomponenten bei der gewählten Reaktionstemperatur ein. Nach beendeter Reaktion wird das Reaktionsgemisch in an sich bekannter Weise einer Wasserdampfdestillation zur Entfernung der Restmonomere unterzogen. Der mittlere Teilchendurchmesser der Polymerisatdispersionen liegt unter 250 nm. Die Brookfield-Viskosität der erfindungsgemäßen Polymerisatdispersionen, gemessen bei einem Feststoffgehalt von 50 ± 1 Gew.-%, liegt unter 2000 mPa.s., die Feststoffkonzentration beträgt mindestens 50 Gew.-%.

Die gemäß dem Verfahren der Erfindung hergestellten Dextrin/Polymerisatdispersionen können vorteilhaft zur Herstellung von Klebstoffen, wie insbesondere Papier-, Folien- oder wasserfesten Holzleimen, als Farb-, Textil-oder Papierhilfsmittel, als Binder für pigmentierte Beschichtungen, wie Teppichrückenbeschichtungen oder Papierstreichmassen, als Binder für mineralische Pigmente oder Fasern, ferner in der Baustoffindustrie, beispielsweise als Zusatz zu hydraulisch abbindenden Massen, verwendet werden.

Die Vorteile des Verfahrens der Erfindung sind darin zu sehen, daß in ebenso einfacher wie wirtschaftlicher Weise Dextrin/Polymerisatdispersionen hergestellt werden, die bei niedriger Viskosität nach dem Stripp-Prozeß einen hohen Feststoffgehalt von mindestens 50 Gew.-% aufweisen, frei von Koagulat sind und eine kleine Teilchengröße besitzen. Die anwendungstechnischen Eigenschaften der dextrinhaltigen Polymerisatdispersionen nach der Erfindung sind gegenüber den Eigenschaften entsprechender, einfacher Mischungen von Dextrinkomponente und Polymerisatdispersion erheblich verbessert. Die Dispersionen gemäß der Erfindung weisen eine geringe Wasserempfindlichkeit auf. Beispielsweise wird die Naßrupffestigkeit von Papier- und Kartonanstrichen deutlich erhöht.

Der Gegenstand der Erfindung wird anhand der nachstehenden Beispiele näher erläutert.

In den nachstehenden Beispielen (1 - 7) und in den Vergleichsbeispielen (V1, V2) werden unterschiedlich modifizierte Dextrine mit unterschiedlichen mittleren Molekulargewichten und Molekulargewichtsverteilungen eingesetzt. Die Ergebnisse zeigen, daß mit nicht erfindungsgemäßen Dextrintypen instabile oder zu hoch viskose Endprodukte entstehen.

### Beispiele 1 bis 7

Zur Durchführung der in den Beispielen beschriebenen Versuche werden jeweils fünf Mischungen bzw. Lösungen nachstehender Zusammensetzung vorbereitet:

| | | |
|---|---|---|
| Mischung A: | 8 | Gew.-Teile Wasser |
| | 0,05 | Gew.-Teile Natriumsalz der Ethylendiaminotetraessigsäure |
| Mischung B: | 2 | Gew.-Teile Wasser |
| | 0,05 | Gew.-Teile Ammoniumperoxidisulfat |
| Mischung C: | 36 | Gew.-Teile 1,3-Butadien |
| | 54,5 | Gew.-Teile Styrol |
| | 7,5 | Gew.-Teile Acrylnitril |
| | 1 | Gew.-Teil Acrylsäure |
| | 1,25 | Gew.-Teile Dodecylmercaptan |
| Mischung D: | 120 | Gew.-Teile Wasser |
| | 1 | Gew.-Teil Itaconsäure |
| | 1,5 | Gew.-Teile Keimlatex mit einer Teilchengröße von 40 nm |
| | 50 | Gew.-Teile Dextrin vom Typ I bis VII (s. Tabelle 1, Einsatzmenge s. Tabelle 1) |
| Mischung E: | 20 | Gew.-Teile Wasser |
| | 0,95 | Gew.-Teile Ammoniumperoxidisulfat |

In einem 4-1-Rührautoklaven wird Mischung A vorgelegt, und danach wird der Reaktor aufgeheizt. Nach Erreichen der Reaktionstemperatur von 90°C wird Mischung B zugegeben. Sofort anschließend wird gleichzeitig die kontinuierliche Dosierung der Mischungen C, D und E vorgenommen. Bevor die Mischungen C und D in den Autoklaven gelangen, werden sie durch einen In-line-Mischer geleitet, der eine innige Vermischung dieser beiden Ströme bewirkt. Mischung E wird separat dosiert. Die Mischungen C, D und E werden mit konstanter Dosiergeschwindigkeit innerhalb 6 Stunden in den Autoklaven gefördert. Nach einer weiteren Stunde Nachreaktionszeit resultiert eine dextrinhaltige Polymerdispersion, deren Eigenschaften in Tabelle 2 zusammengestellt sind. Die nach Entfernung der Restmonomere durch Wasserdampfdestillation (Strippen) und Anhebung des pH-Wertes auf 6 resultierenden Eigenschaften sind ebenfalls in Tabelle 2 aufgeführt.

### Vergleichsbeispiele Nr. V1 und V2 (Diese Versuche sind nicht Bestandteil der Erfindung.)

Die Polymerisation wird entsprechend den Beispielen 1 - 7 durchgeführt. Für die Vergleichsversuche werden die Dextrine VIII bzw. IX (s. Tabelle 1) verwendet, die nicht dem erfindungsgemäßen Verfahren entsprechen. Die resultierenden Polymerisate sind entweder nicht fließfähig oder vollständig koaguliert (s. Tabelle 2).

**Tabelle 1**

| Dextrintyp | Bezeichnung | Zahlenmittel des Molekulargewichts g/mol | Molekulargewichtsanteil | |
|---|---|---|---|---|
| | | | >5000 Gew.-% | >100000 Gew.-% |
| I | 07082 2) | 4.700 | 66,0 | 0 |
| II | 07380 2) | 3.300 | 68,7 | 0,5 |
| III | 08320 2) | 3.400 | 66,5 | 0 |
| IV | 08380 2) | 3.400 | 66,1 | 2,8 |
| V | Tackidex^{(R)} Jo 55 K 3) | 4.100 | 70,4 | 0,6 |
| VI | acetyliertes Dextrin 4) | 5.830 | 79,8 | 0 |
| VII | carboxyliertes Dextrin Nr. 1 4) | 5.900 | 78,2 | 3,6 |
| VIII 1) | 07321 2) | 4.700 | 83,8 | 6,9 |
| IX 1) | carboxyliertes Dextrin Nr. 2 4) | 10.900 | 86,0 | 14,6 |

| | | | | |
|---|---|---|---|---|
| 1) kein erfindungsgemäßes Dextrin | | | | |
| 2) Maisdextrin der Fa. Cerestar GmbH, Krefeld | | | | |
| 3) Maisdextrin der Fa. Roquette, Lille, F | | | | |
| 4) chemisch modifizierte Dextrine der Fa. Cerestar GmbH, Krefeld | | | | |

**Tabelle 2**

| Vers.-Nr. | Dextrintyp | Eigenschaften ex Reaktor | | | Eigenschaften nach Strippen | | | |
|---|---|---|---|---|---|---|---|---|
| | | TS Gew.-% | pH | Visk. mPa.s | TS Gew.-% | pH | Visk. mPa.s | T.Gr. in nm |
| 1 | I | 48,1 | 1,8 | 980 | 50,3 | 6,0 | 1300 | 250 |
| 2 | II | 48,4 | 2,0 | 780 | 50,3 | 5,8 | 1300 | 221 |
| 3 | III | 50,0 | 1,9 | 160 | 50,2 | 6,0 | 180 | 209 |
| 4 | IV | 48,0 | 1,8 | 100 | 50,2 | 6,0 | 190 | 180 |
| 5 | V | 48,9 | 2,1 | 1080 | 50,5 | 5,8 | 1500 | 183 |
| 6 | VI | 49,7 | 1,9 | 670 | 50,7 | 5,8 | 300 | 179 |
| 7 | VII | 49,6 | 2,1 | 1780 | 48,8 | 5,8 | 495 | 194 |
| V1 1) | VIII | Ansatz vollständig koaguliert | | | | | | |
| V2 1) | IX | Dispersion nicht fließfähig | | | | | | |

| | | | | | | | | |
|---|---|---|---|---|---|---|---|---|
| 1) nicht erfindungsgemäß | | | | | | | | |

Die nachfolgenden Versuche sollen die Anwendungsbreite des erfindungsgemäßen Verfahrens aufzeigen.

### Beispiele 8 - 10

In den versuchen werden Polymerisate unter Verwendung unterschiedlicher Mengen eines Dextrins bei zusätzlicher Verwendung eines anionischen Emulgators hergestellt. Zur Durchführung der Versuche werden wiederum je fünf Mischungen bzw. Lösungen hergestellt. Die Zusammensetzungen der Mischungen A und B entsprechen denen der Beispiele 1 - 7. Die Mischungen C, D und E haben folgende Zusammensetzungen:

| | | |
|---|---|---|
| Mischung C: | 36 | Gew.-Teile 1,3-Butadien |
| | 47 | Gew.-Teile Styrol |
| | 13 | Gew.-Teile Acrylnitril |
| | 1 | Gew.-Teil Acrylsäure |
| | 1,25 | Gew.-Teile Dodecylmercaptan |
| Mischung D: | variabel | Gew.-Teile Wasser (Einsatzmenge s. Tabelle 3) |
| | 3 | Gew.-Teile Itaconsäure |
| | 1,5 | Gew.-Teile Keimlatex mit einer Teilchengröße von 40 nm |
| | variabel | Gew.-Teile Dextrin III (s. Tabelle 1, Einsatzmenge s. Tabelle 3) |
| Mischung E: | 20 | Gew.-Teile Wasser |
| | 0,6 | Gew.-Teile des Natriumsalzes eines Alkyldiphenyletherdisulfonates (Dowfax^{(R)} 2A1 der Firma Dow Chem. Comp.) |
| | 0,95 | Gew.-Teile Ammoniumperoxidisulfat. |

Die Polymerisation wird wie in den Beispielen 1 - 7 durchgeführt. Es resultieren dextrinhaltige Polymerdispersionen, deren Eigenschaften in Tabelle 3 zusammengestellt sind.

### Beispiele 11 und 12

Die Versuche 11 und 12 zeigen Polymerisate unter Verwendung unterschiedlicher Mengen eines Dextrins ohne zusätzliche Verwendung eines anionischen Emulgators. Zur Durchführung der Versuche werden wiederum je fünf Mischungen bzw. Lösungen hergestellt. Die Zusammensetzungen der Mischungen A, B, C und E entsprechen denen der Beispiele 1 - 7. Die Mischung D hat folgende Zusammensetzung:

| | | |
|---|---|---|
| Mischung D: | variabel | Gew.-Teile Wasser |
| | 1 | Gew.-Teil Itaconsäure |
| | 1,5 | Gew.-Teile Keimlatex mit einer Teilchengröße von 40 nm |
| | variabel | Gew.-Teile Dextrin III (s. Tabelle 1, Einsatzmenge s. Tabelle 3) |

In den Beispielen 13 und 14 wird der Einfluß des Polymerisationsverfahrens auf die Eigenschaften der resultierenden dextrinhaltigen Polymerdispersionen aufgezeigt. Die Ergebnisse zeigen, daß die bevorzugte Ausführungsform der Erfindung, bei der die Dextrinkomponente vollständig kontinuierlich in den Polymerisationsreaktor eingeleitet wird, besonders niedrigviskose Polymerdispersionen liefert.

### Beispiel 13

Für den Versuch werden vier Mischungen bzw. Lösungen folgender Zusammensetzung vorbereitet.

| | | |
|---|---|---|
| Mischung A: | 78 | Gew.-Teile Wasser |
| | 3 | Gew.-Teile Itaconsäure |
| | 0,05 | Gew.-Teile Natriumsalz der Ethylendiamintetraessigsäure |
| | 0,1 | Gew.-Teile des Natriumsalzes eines Alkyldiphenyletherdisulfonates (Dowfax^{(R)} 2A1 der Firma Dow Chem. Comp.) |
| | 1,5 | Gew.-Teile Keimlatex mit einer Teilchengröße von 40 nm |
| | 10 | Gew.-Teile Dextrin III (s. Tabelle 2 |
| Mischung B: | 2 | Gew.-Teile Wasser |
| | 0,1 | Gew.-Teile Ammoniumperoxidisulfat. |
| Mischung C: | 36 | Gew.-Teile 1,3-Butadien |
| | 47 | Gew.-Teile Styrol |
| | 13 | Gew.-Teile Acrylnitril |
| | 1 | Gew.-Teil Acrylsäure |
| | 1,25 | Gew.-Teile Dodecylmercaptan |
| Mischung D: | 30 | Gew.-Teile Wasser |
| | 0,5 | Gew.-Teile des Natriumsalzes eines Alkyldiphenyletherdisulfonates (Dowfax^{(R)} 2A1 der Firma Dow Chem. Comp.) |
| | 0,9 | Gew.-Teile Ammoniumperoxidisulfat |

In einem 4-l-Rührautoklaven wird Mischung A vorgelegt und der Reaktor aufgeheizt. Nach Erreichen der Reaktionstemperatur von 90°C wird Mischung B zugegeben. Sofort anschließend wird gleichzeitig die Dosierung der Mischungen C und D vorgenommen. Die Mischungen werden separat und mit konstanter Dosiergeschwindigkeit innerhalb 6 Stunden in den Autoklaven gefördert. Nach einer weiteren Stunde Nachreaktionszeit resultiert eine dextrinhaltige Polymerdispersion, deren Eigenschaften ex Reaktor und nach dem Strippen in Tabelle 3 aufgelistet sind.

### Beispiel 14

Für den Versuch werden fünf Mischungen bzw. Lösungen folgender Zusammensetzung vorbereitet.

| | | |
|---|---|---|
| Mischung A: | 28 | Gew.-Teile Wasser |
| | 0,05 | Gew.-Teile Natriumsalz der Ethylendiamintetraessigsäure |
| | 1,5 | Gew.-Teile Keimlatex mit einer Teilchengröße von 40 nm |
| Mischung B: | 2 | Gew.-Teile Wasser |
| | 0,05 | Gew.-Teile Ammoniumperoxidisulfat |
| Mischung C: | 36 | Gew.-Teile 1,3-Butadien |
| | 54,5 | Gew.-Teile Styrol |
| | 7,5 | Gew.-Teile Acrylnitril |
| | 1 | Gew.-Teil Acrylsäure |
| | 1,25 | Gew.-Teile Dodecylmercaptan |
| Mischung D: | 120 | Gew.-Teile Wasser |
| | 1 | Gew.-Teil Itaconsäure |
| | 50 | Gew.-Teile Dextrin III (s. Tab. 2) |
| Mischung E: | 10 | Gew.-Teile Wasser |
| | 0,95 | Gew.-Teile Ammoniumperoxidisulfat |

Die Polymerisation wird wie in den Beispielen 1-7 beschrieben durchgeführt mit dem Unterschied, daß die Mischungen C und D separat dosiert werden. Die Eigenschaften der resultierenden dextrinhaltigen Polymerdispersion sind in Tabelle 3 zusammengestellt.

### Beispiel 15

In diesem Beispiel wird ein kationisch modifiziertes Dextrin eingesetzt.

Zur Durchführung dieses Versuches werden fünf Mischungen bzw. Lösungen nachstehender Zusammensetzung vorbereitet:

| | | |
|---|---|---|
| Mischung A: | 8 | Gew.-Teile Wasser |
| | 0,05 | Gew.-Teile Natriumsalz der Ethylendiamintetraessigsäure |
| Mischung B: | 2 | Gew.-Teile Wasser |
| | 0,05 | Gew.-Teile Ammoniumperoxidisulfat |
| Mischung C: | 36 | Gew.-Teile 1,3-Butadien |
| | 54,5 | Gew.-Teile Styrol |
| | 7,5 | Gew.-Teile Acrylnitril |
| | 1,25 | Gew.-Teile Dodecylmercaptan |
| Mischung D: | 120 | Gew.-Teile Wasser |
| | 50 | Gew.-Teile eines erfindungsgemäßen, kationisch modifizierten Dextrins (der Firma Cerestar GmbH, Krefeld) |
| Mischung E: | 20 | Gew.-Teile Wasser |
| | 0,95 | Gew.-Teile Ammoniumperoxidisulfat |

Die Polymerisation wird wie in den Beispielen 1-7 beschrieben durchgeführt. Es resultiert eine kationische Polymerdispersion mit einem Zeta-Potential von 22,8 mV. Die weiteren Eigenschaften dieser Polymerdispersion sind in Tabelle 3 zusammengestellt.

**Tabelle 3**

| Beispiel | Wassermenge in Misch.D | Dextrinmenge | Eigenschaften ex Reaktor | | | Eigenschaften nach Strippen | | | |
|---|---|---|---|---|---|---|---|---|---|
| | Gew.-% | Gew.-% | TS Gew.-% | pH | Visk. mPa.s | TS Gew.-% | pH | Visk. mPa.s | T.Gr. in nm |
| 8 | 80 | 10 | 49,3 | 2,6 | 230 | 51,8 | 6,0 | 365 | 188 |
| 9 | 80 | 20 | 51,1 | 2,3 | 580 | 51,8 | 6,0 | 580 | 182 |
| 10 | 100 | 50 | 53,5 | 2,1 | 850 | 50,3 | 6,0 | 650 | 173 |
| 11 | 120 | 50 | 50,0 | 1,9 | 160 | 50,2 | 6,0 | 180 | 209 |
| 12 | 180 | 100 | 49,0 | 1,8 | 240 | 55,1 | 6,0 | 380 | 196 |
| 13 | 30 | 10 | 49,2 | 3,2 | 3400 | 48,5 | 6,0 | 1280 | 170 |
| 14 | 120 | 50 | 47,9 | 1,8 | 85 | 50,3 | 6,0 | 245 | 183 |
| 15 | 120 | 50 | 49,3 | 1,9 | 700 | 50,4 | 4,8 | 680 | 197 |

### Beispiele 16 bis 19

In diesen Beispielen werden anwendungstechnische Vorteile der dextrinhaltigen Polymerdispersion aufgezeigt.

Hierzu wurden vier Papierstreichfarben entsprechend den in Tabelle 4 aufgelisteten Zusammensetzungen hergestellt und mit einem Laborrakel auf ein holzhaltiges Rohpapier (Flächengewicht 36 g/m²) gestrichen (Auftragsgewicht 12 g/m²). Die gestrichenen Blätter wurden getrocknet (3 min, 110°C), kalandriert (70°C, 700 N/cm) und den folgenden Tests unterworfen.
1. Naßrupftest mit dem Prüfbau-Probedruckgerät (niedrige Remissions-Werte zeigen hohe Naßrupffestigkeit an).
2. Trockenrupftest mit dem IGT-Probedruckgerät (hohe Werte zeigen hohe Trockenrupffestigkeit an).

Die Ergebnisse der Tabelle 4 zeigen, daß bei unverändert guter Trockenrupffestigkeit mit der erfindungsgemäßen Dispersion deutlich bessere Naßrupffestigkeiten erzielt werden als mit nicht erfindungsgemäßen Mischungen.

**Tabelle 4**

| Komponente | | Zusammensetzung / Versuch Nr. | | | |
|---|---|---|---|---|---|
| | | 16 | 17 | 18 | 19 |
| Calciumcarbonat (Hydrocarb^{(R)}90 *1) | Gew.-Teile | 30,0 | 30,0 | 30,0 | 30,0 |
| Clay SPS (Speswhite^{(R)} *2) | Gew. -Teile | 70,0 | 70,0 | 70,0 | 70,0 |
| Dispergiermittel (Polysalz F *3) | Gew.-Teile | 0,25 | 0,25 | 0,25 | 0,25 |
| Ca-Stearat (Ombrelube^{(R)} FC 544 *4) | Gew.-Teile | 0,1 | 0,1 | 0,1 | 0,1 |
| Dispersion 11 (s. Tabelle 3) | Gew.-Teile | 14,0 | - | - | - |
| Dispersion 14 (s. Tabelle 3) | Gew.-Teile | - | 14,0 | - | - |
| Vergleichsdispersion *5) | Gew.-Teile | - | - | 9,5 | 9,5 |
| Dextrin Nr. III (s. Tabelle 1) | Gew.-Teile | - | - | 4,5 | - |
| Vergleichsstärke *6) | Gew.-Teile | - | - | - | 4,5 |
| TS | Gew.-% | 55,0 | 55,0 | 55,0 | 55,0 |
| pH | | 9,0 | 9,0 | 9,0 | 9,0 |
| Streichfarbenviskosität, mPa.s | | 173 | 165 | 60 | 1790 |
| Naßrupffestigkeit, % Remission | | 11,9 | 15,3 | 54,5 | 39,5 |
| Trockenrupffestigkeit, cm/s | | 115 | 115 | 105 | 105 |

| | | | | | |
|---|---|---|---|---|---|
| *1) Omya GmbH, Köln; | | | | | |
| *2) ECC, Düsseldorf | | | | | |
| *3) BASF, Ludwigshafen; | | | | | |
| *4) Münzig Chemie GmbH, Heilbronn | | | | | |
| *5) Stärkefreie Polymerdispersion mit ansonsten gleicher Zusammensetzung wie Dispersion 11 | | | | | |
| *6) Handelsübliche Stärke (Amysol^{(R)}5582 der Fa. Cerestar GmbH, Krefeld) | | | | | |

Die Trockensubstanzgehalte (TS) wurden durch Trocknen der Produkte bis zur Gewichtskonstanz bei 140°C bestimmt. Viskositäten wurden gemessen mit einem Brookfield-Viskosimeter Typ LVF bei 60 U/min. Die mittlere Teilchengröße wurde mit Hilfe eines Photonenkorrelationsspektrometers bestimmt (BI 90, Volume Average Particle Size, Angabe in nm). Die Molmassenverteilung der Dextrine (Tabelle 1) wurde chromatographisch mit sulfoniertem PS/Divinylbenzol-Harz (Showa Denko, Ionpak^{(R)} S800) bestimmt, wobei die Kalibrierung mit Pollulan und die Elution mit 0,5%iger wäßriger NaCl-Lösung erfolgten.

## Patentansprüche

1. Verfahren zur Herstellung wäßriger Polymerisatdispersionen durch Polymerisation ethylenisch ungesättigter Verbindungen mittels freie Radikale liefernder Initiatoren in Gegenwart von Stärke und/oder Stärkederivaten und gegebenenfalls weiterer Zusatzstoffe, dadurch gekennzeichnet, daß in einem halbkontinuierlichen Verfahren 100 Gew.-Teile Monomer oder Monomermischung aus
20 bis 100 Gew.-% eines Diens
0 bis 80 Gew.-% eines vinylaromatischen Monomers
0 bis 50 Gew.-% eines ethylenisch ungesättigten Monomers
in Gegenwart von 10 bis 200 Gew.-Teilen gegebenenfalls chemisch modifizierter Dextrine polymerisiert werden, deren Gewichtsanteil mit einem Molekulargewicht über 5.000 mindestens 50 Gew.-%, und deren Gewichtsanteil mit einem Molekulargewicht über 100.000 höchstens 5 Gew.-% beträgt.

2. Verfahren nach Anspruch 1, dadurch gekennzeichnet, daß der Gewichtsanteil der Dextrine mit einem Molekulargewicht über 5.000 vorzugsweise mindestens 55 und insbesondere mindestens 65 Gew.-% beträgt.

3. Verfahren nach den Ansprüchen 1 bis 2, dadurch gekennzeichnet, daß die gesamte wäßrige Dextrinlösung oder Dispersion oder -dispersion getrennt und gleichzeitig mit dem Monomer oder der Monomermischung in den Polymerisationsreaktor kontinuierlich eingeleitet wird.

4. Verfahren nach den Ansprüchen 1 bis 2, dadurch gekennzeichnet, daß die wäßrige Dextrinlösung oder -dispersion unmittelbar vor dem Eintritt in den Polymerisationsreaktor mit dem Monomer oder der Monomermischung homogen und innig vermischt und unmittelbar in den Reaktor kontinuierlich eingetragen wird.

5. Verfahren nach den Ansprüchen 1 bis 4, dadurch gekennzeichnet, daß als Dextrin ein kationisch modifiziertes Dextrin verwendet wird.

6. Verfahren nach den Ansprüchen 1 bis 5, dadurch gekennzeichnet, daß die Dextrine in einer Menge von 25 bis 100 Gew.-Teilen (auf TS bezogen) pro 100 Gew.-Teile Monomer oder Monomermischung eingesetzt werden.

7. Verfahren nach den Ansprüchen 1 bis 6, dadurch gekennzeichnet, daß die Polymerisation bei Temperaturen von 0 bis 120, vorzugsweise 40 bis 100°C, durchgeführt wird.

8. Verfahren nach den Ansprüchen 1 bis 7, dadurch gekennzeichnet, daß als freie Radikale liefernder Initiator ein Alkalimetall- oder Ammoniumsalze der Peroxidischwefelsäure verwendet werden.

9. Verfahren nach den Ansprüchen 1 bis 8, dadurch gekennzeichnet, daß eine Monomermischung verwendet wird der Zusammensetzung
20 bis 70 Gew.-% 1,3-Butadien
30 bis 80 Gew.-% Styrol
0 bis 15 Gew.-% Acrylnitril
0 bis 5 Gew.-% ethylenisch ungesättigte Mono- oder Dicarbonsäure.

## Claims

1. A method for producing aqueous polymer dispersions by polymerisation of ethylenically unsaturated compounds by means of initiators providing free radicals in the presence of starch and/or starch derivatives and optionally other additives, characterised in that in a semi-continuous process 100 parts by weight monomer or monomer mixture consisting of
20 to 100% by weight of a diene
0 to 80% by weight of a vinyl-aromatic monomer
0 to 50% by weight of an ethylenically unsaturated monomer
are polymerised in the presence of 10 to 200 parts by weight optionally chemically modified dextrins, the proportion by weight of which having a molecular weight of above 5,000 is at least 50 % by weight and the proportion by weight of which having a molecular weight of above 100,000 is at most 5% by weight.

2. A method according to Claim 1, characterised in that the proportion by weight of the dextrins having a molecular weight of above 5,000 is preferably at least 55 and in particular at least 65% by weight.

3. A method according to Claims 1 to 2, characterised in that the entire aqueous dextrin solution or dispersion is separated and introduced continuously into the polymerisation reactor simultaneously with the monomer or the monomer mixture.

4. A method according to Claims 1 to 2, characterised in that the aqueous dextrin solution or dispersion is mixed thoroughly and homogenously with the monomer or the monomer mixture immediately before entry into the polymerisation reactor, and the mixture is then immediately introduced continuously into the reactor.

5. A method according to Claims 1 to 4, characterised in that a cationically-modified dextrin is used as the dextrin.

6. A method according to Claims 1 to 5, characterised in that the dextrins are used in a quantity of 25 to 100 parts by weight (relative to DS) per 100 parts by weight monomer or monomer mixture.

7. A method according to Claims 1 to 6, characterised in that the polymerisation is performed at temperatures of 0 to 120, preferably 40 to 100°C.

8. A method according to Claims 1 to 7, characterised in that alkali metal or ammonium salts of peroxydisulphuric acid are used as initiators providing free radicals.

9. A method according to Claims 1 to 8, characterised in that a monomer mixture of the composition
20 to 70 % by weight 1,3-butadiene
30 to 80 % by weight styrene
0 to 15 % by weight acrylonitrile
0 to 5 % by weight ethylenically unsaturated monocarboxylic or dicarboxylic acid
is used.

## Revendications

1. Procédé de préparation de dispersions aqueuses de polymère par polymérisation de composés à insaturation éthylénique au moyen d'initiateurs donnant des radicaux libres, en présence d'amidon et/ou de dérivés amylacés et, le cas échéant, d'autres additifs, caractérisé en ce qu'il consiste à polymériser, dans un procédé semi-continu, 100 parties en poids de monomère ou d'un mélange de monomères constitué de
20 à 100 % en poids d'un diène
0 à 80 % en poids d'un monomère vinylaromatique
0 à 50 % en poids d'un monomère à insaturation éthylénique
en présence de 10 à 200 parties en poids de dextrine éventuellement modifiée chimiquement, dont la proportion en poids, ayant une masse moléculaire supérieure à 5000, est d'au moins 50 % en poids, et dont la proportion en poids, ayant une masse moléculaire supérieure à 100 000, est au plus de 5 % en poids.

2. Procédé suivant la revendication 1, caractérisé en ce que la proportion en poids de dextrine, ayant une masse moléculaire supérieure à 5000 est, de préférence, d'au moins 55 et notamment, d'au moins 65 % en poids.

3. Procédé suivant la revendication 1 ou 2, caractérisé en ce qu'il consiste à envoyer en continu, dans le réacteur de polymérisation, toute la solution ou dispersion aqueuse de dextrine séparément et en même temps que le monomère ou que le mélange de monomères.

4. Procédé suivant la revendication 1 ou 2, caractérisé en ce qu'il consiste à mélanger d'une manière homogène et intime la solution ou dispersion aqueuse de dextrine au monomère ou au mélange de monomères juste avant l'entrée dans le réacteur de polymérisation et à l'introduire en continu directement dans le réacteur.

5. Procédé suivant les revendications 1 à 4, caractérisé en ce qu'il consiste à utiliser comme dextrine une dextrine modifiée cationiquement.

6. Procédé suivant les revendications 1 à 5, caractérisé en ce qu'il consiste à engager la dextrine en une quantité de 25 à 100 parties en poids (en matières sèches) pour 100 parties en poids de monomère ou du mélange de monomères.

7. Procédé suivant les revendications 1 à 6, caractérisé en ce qu'il consiste à effectuer la polymérisation à des températures de 0 à 120 et, de préférence, de 40 à 100°C.

8. Procédé suivant les revendications 1 à 7, caractérisé en ce qu'il consiste à utiliser comme initiateur donnant des radicaux libres un sel de métal alcalin ou un sel d'ammonium de l'acide peroxodisulfurique.

9. Procédé suivant les revendications 1 à 8, caractérisé en ce qu'il consiste à utiliser un mélange de monomères de composition
20 à 70 % en poids de 1,3-butadiène
30 à 80 % en poids de styrène
0 à 15 % en poids d'acrylonitrile
0 à 5 % en poids d'acide monocarboxylique ou dicarboxylique à insaturation éthylénique.
